(19) Europäisches Patentamt
European Patent Office
Office européen des brevets

(11) **EP 4 046 909 B1**

(12) **FASCICULE DE BREVET EUROPEEN**

(45) Date de publication et mention de la délivrance du brevet:
**20.12.2023 Bulletin 2023/51**

(21) Numéro de dépôt: **22155919.8**

(22) Date de dépôt: **09.02.2022**

(51) Classification Internationale des Brevets (IPC):
**B64C 27/12** *(2006.01)*    **B64D 31/00** *(2006.01)*
**B64D 35/02** *(2006.01)*    **B64D 35/08** *(2006.01)*

(52) Classification Coopérative des Brevets (CPC):
**B64C 27/12; B64D 31/00; B64D 35/02;**
**B64D 35/08;** B64D 2027/026; Y02T 50/60

(54) **PROCÉDÉ ET DISPOSITIF DE CONTROLE D'UNE INSTALLATION MOTRICE THERMIQUE ET ÉLECTRIQUE POUR GIRAVION**

VERFAHREN UND VORRICHTUNG ZUR STEUERUNG EINER THERMISCHEN UND ELEKTRISCHEN ANTRIEBSANLAGE FÜR DREHFLÜGELFLUGZEUGE

METHOD AND DEVICE FOR CONTROLLING A THERMAL AND ELECTRIC POWER PLANT FOR ROTORCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2021 FR 2101689**

(43) Date de publication de la demande:
**24.08.2022 Bulletin 2022/34**

(73) Titulaire: **Airbus Helicopters**
**13725 Marignane Cedex (FR)**

(72) Inventeurs:
• **SERR, Christophe**
**13109 SIMIANE-COLLONGUE (FR)**
• **HONNORAT, Olivier**
**13290 AIX EN PROVENCE (FR)**
• **MADEIRA, Alexandre**
**13100 AIX EN PROVENCE (FR)**
• **COQUILLAT, Jean-Christophe**
**04500 RIEZ (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
FR-A1- 2 994 687        FR-A1- 3 090 576
US-A1- 2013 199 198    US-A1- 2019 322 382

## Description

La présente invention vise un procédé et un dispositif de contrôle d'une installation motrice thermique et électrique pour giravion. L'invention se situe dans le domaine technique d'une installation motrice thermique et électrique pour aéronef, et plus particulièrement des installations motrices pour giravion.

Un giravion est classiquement pourvu d'au moins un organe, dénommé « organe rotatif » par la suite, pour assurer sa sustentation et/ou sa propulsion. Ainsi, un giravion comporte au moins une voilure tournante formant un rotor principal. Un giravion peut aussi comporter au moins un rotor auxiliaire, par exemple un rotor arrière. Un giravion peut également comporter une ou plusieurs hélices destinées principalement à la propulsion du giravion.

Un giravion est en outre muni d'une installation motrice pour mettre en mouvement les divers organes rotatifs précités, et notamment le ou les rotors ainsi que la ou les hélices éventuelles.

L'installation motrice peut comprendre, à cet effet, un ou plusieurs moteurs thermiques qui mettent en mouvement une chaîne de transmission de puissance. La chaîne de transmission de puissance met alors en rotation au moins un des divers organes rotatifs précités. Une telle chaîne de transmission de puissance peut comprendre une boîte de transmission de puissance principale débouchant notamment sur le rotor principal éventuel, une boîte de transmission de puissance arrière débouchant sur un rotor arrière éventuel, une boîte de transmission de puissance par hélice éventuelle, des arbres, des moyens de connexion...

En outre, une panne du ou des moteurs thermiques peut entraîner le giravion dans une phase non motorisée de vol en autorotation.

L'installation motrice peut être équipée d'un kit de motorisation électrique pour assister le ou les moteurs thermiques en cas de panne. Le giravion possède alors une installation motrice thermique et électrique pour mettre en mouvement la chaîne de transmission de puissance.

Il est à noter que l'expression « moteur thermique » désigne par commodité dans l'ensemble du texte tout moteur fonctionnant avec un carburant pouvant être utilisé dans une telle installation motrice pour giravion, par exemple des turbomoteurs ou encore des moteurs à pistons. L'expression « moteur thermique » est à opposer à l'expression « moteur électrique » qualifiant les moteurs mus par une énergie électrique.

Un moteur électrique d'une installation motrice hybride peut être utilisé uniquement en mode moteur afin de transformer une énergie électrique en énergie mécanique. Un moteur électrique peut aussi être une machine électrique combinant le mode moteur avec un mode générateur électrique afin de transformer une énergie mécanique en énergie électrique pour recharger une source d'énergie électrique rechargeable par exemple.

Les documents FR 2994687 et FR 3090576 décrivent ainsi une installation motrice hybride d'un giravion munie d'un unique moteur thermique, d'un moteur électrique, d'une boîte de transmission principale de puissance et d'un moyen de stockage d'énergie électrique. Suite à une panne du moteur thermique, le moteur électrique fournit une puissance mécanique afin d'assister le pilote du giravion dans la réalisation d'une phase de vol en autorotation consécutive à la panne.

Le document US 2019/0322382 décrit un moteur de propulsion hybride pour un aéronef comportant au moins un moteur thermique et au moins un moteur électrique lié à un organe rotatif du moteur de propulsion hybride par des arbres d'entraînement. Le moteur de propulsion hybride peut fonctionner selon plusieurs modes de fonctionnement dans lesquels les moteurs thermique et électrique entraîne conjointement ou indépendamment l'organe rotatif du moteur de propulsion hybride. Un contrôleur pilote le basculement entre les modes de fonctionnement suite à une entrée d'un pilote et/ou en fonction d'un ou plusieurs paramètres, tels que la vitesse de l'aéronef, l'altitude de l'aéronef ou encore un ou des états du moteur thermique et/ou du moteur électrique.

La présente invention a alors pour objet de proposer un procédé et un dispositif de gestion alternatif de l'énergie fournie par une installation motrice thermique et électrique pour la mise en mouvement d'au moins un rotor d'un giravion visant à optimiser le fonctionnement du giravion en fonction de son environnement.

L'invention concerne un procédé de contrôle d'une installation motrice thermique et électrique pour mettre en mouvement au moins un organe rotatif d'un giravion, ladite installation motrice comprenant un système thermique et un système électrique pour mettre en mouvement une chaîne de transmission de puissance reliée audit au moins un organe rotatif, le système thermique ayant au moins un moteur thermique et le système électrique étant muni d'au moins une machine électrique, ledit système électrique ayant une source d'énergie électrique reliée électriquement à ladite au moins une machine électrique.

Le procédé comporte une sélection avec un sélecteur d'un mode de fonctionnement choisi parmi plusieurs modes de fonctionnement, le procédé ayant une phase d'hybridation comprenant les étapes suivantes :

- comparaison avec un contrôleur entre une altitude-densité courante et une altitude-densité seuil,
- contrôle avec le contrôleur de ladite au moins une machine électrique en fonction dudit mode de fonctionnement choisi ainsi que de ladite comparaison et d'une puissance nécessaire à fournir à ladite chaîne de transmission de puissance.

En particulier, le contrôleur contrôle la machine électrique selon un des modes de fonctionnement, le mode appliqué étant ou n'étant pas le mode de fonctionnement choisi en fonction de ladite comparaison et de la puissance nécessaire. La puissance nécessaire correspond à la puissance requise par l'aéronef pour tenir le cas de vol demandé. Cette puissance nécessaire peut correspondre à chaque instant à la somme des puissances transmises à la chaîne de transmission de puissance par le ou les moteurs thermiques et la ou les machines électriques, éventuellement aux pertes énergétiques de la chaîne de transmission de puissance et à la puissance prélevée pour entraîner des accessoires près.

La puissance nécessaire peut être calculée, par exemple, à l'aide de lois mémorisées et/ou d'un ou plusieurs senseurs de puissance. Un tel senseur de puissance peut être disposé sur la chaîne de transmission de puissance, sur un arbre de travail d'un moteur thermique voire sur un arbre de travail d'une machine électrique. Un senseur de puissance peut comprendre un couplemètre et un capteur de vitesse de rotation ainsi qu'un moyen de calcul par exemple, la puissance étant égale au produit du couple mesuré et de la vitesse de rotation mesurée.

Le procédé comporte ainsi la détermination d'une altitude-densité courante à une position courante dudit giravion. Cette étape peut être réalisée en dehors ou durant la phase d'hybridation.

L'organe rotatif peut être un organe participant au déplacement de l'aéronef, tel qu'une voilure tournante participant au moins à la sustentation du giravion, un rotor de contrôle du mouvement en lacet du giravion, ou une hélice par exemple.

L'expression « installation motrice comprenant un système thermique et un système électrique pour mettre en mouvement une chaîne de transmission de puissance reliée audit au moins un organe rotatif » signifie que le ou les moteurs thermiques et la ou les machines électriques peuvent mettre en mouvement la chaîne de transmission de puissance.

Dès lors, un individu, peut manoeuvrer le sélecteur pour choisir un mode fonctionnement. Le contrôleur applique le mode fonctionnement choisi ou un autre mode de fonctionnement en fonction du choix effectué mais aussi de l'altitude-densité courante et de la puissance nécessaire, voire d'une puissance disponible susceptible à chaque instant d'être développée par le système thermique pour le vol. Le contrôleur applique une loi pour déterminer selon quel mode de fonctionnement doivent fonctionner la ou les machines électriques. Dès lors, le contrôleur transmet un signal de commande à la ou les machines électriques pour appliquer le mode de fonctionnement adéquat selon la situation courante, à savoir selon le choix du pilote et le cas de vol courant. Par exemple, un signal de commande peut être porteur de la puissance mécanique à fournir ou à prélever par la machine électrique le recevant.

Le terme « signal » peut désigner par exemple un signal analogique, numérique, discret, électrique, optique. Un signal de commande peut, par exemple, prendre la forme d'un courant électrique ayant une intensité électrique image d'une puissance mécanique à fournir ou à prélever.

En effet, un giravion évolue souvent dans un premier domaine de vol à faible altitude pour effectuer sa mission. Dans ce cas, la puissance transmise aux organes rotatifs est essentiellement limitée par la puissance pouvant être développée par la chaîne de transmission de puissance. Une telle puissance est dénommée « puissance limite maximale » par la suite.

Un giravion peut aussi parfois évoluer dans un deuxième domaine de vol, à savoir à haute altitude ou à basse altitude mais en présence d'un climat très chaud. Dans ce cas, la puissance transmise aux organes rotatifs est essentiellement limitée par la puissance disponible pouvant être développée conjointement par le ou les moteurs thermiques. La puissance disponible peut être obtenue par le contrôleur à l'aide d'une loi mémorisée donnant cette puissance disponible en fonction de l'altitude-densité courante, voire en fonction de la pression atmosphérique et de la température extérieure, ou peut être déterminée par un calculateur moteur ou un autre organe par exemple.

Dès lors, le contrôleur détermine dans quel domaine de vol évolue l'aéronef en comparant l'altitude-densité courante à une altitude-densité seuil mémorisée. En fonction du domaine de vol courant et du choix effectué par un individu à l'aide du sélecteur, le contrôleur pilote, durant la phase d'hybridation, la ou les machines électriques pour optimiser le fonctionnement de l'aéronef au regard de la limitation la plus pertinente dans le domaine de vol courant.

Le procédé peut notamment de plus comporter une ou plusieurs des caractéristiques qui suivent, prises seules ou en combinaison.

En particulier, le procédé peut appliquer diverses étapes lors de boucles successives.

Selon une possibilité, lesdits plusieurs modes de fonctionnement peuvent comprendre un mode de veille durant lequel ladite au moins une machine électrique est arrêtée ou en mode générateur électrique pour recharger ladite source d'énergie électrique durant une phase de recharge, un mode économique durant lequel ladite au moins une machine électrique fonctionne en mode moteur et le système thermique délivre une puissance réduite, par exemple prédéterminée, et un mode performant durant lequel ladite au moins une machine électrique fonctionne en mode moteur et le système thermique délivre une puissance principale maximale prédéterminée, et le contrôleur peut contrôler ladite au moins une machine électrique selon ledit mode de veille lorsque conjointement ledit mode de fonctionnement choisi est ledit mode performant et ladite altitude-densité courante est inférieure à l'altitude-densité seuil.

Lorsque le mode de veille est commandé par le contrôleur, la ou les machines électriques sont le cas échéant arrêtées par le contrôleur si elles fonctionnent en mode moteur. La ou les machines électriques basculent alors, si nécessaire et sur ordre du contrôleur, en mode générateur électrique pour recharger la source d'énergie électrique. Ce mode de veille permet de détecter si une machine électrique est dans une configuration apte à la recharge électrique et permet ainsi d'activer, si nécessaire, la recharge via un fonctionnement en mode générateur électrique.

Lorsque le mode performant est activé par le contrôleur, la ou les machines électriques fonctionnent en mode moteur afin de délivrer une puissance mécanique additionnelle à des fins de performance. Cette puissance mécanique additionnelle permet par exemple de pallier la baisse de la puissance mécanique développée par le ou les moteurs thermiques en raison des conditions atmosphériques notamment. La puissance mécanique additionnelle est établie pour respecter la puissance limite maximale acceptable par la chaîne de transmission de puissance. De plus, la puissance mécanique additionnelle peut être bornée pour ne pas dépasser la limite de puissance de la machine électrique. L'assistance à l'autorotation est aussi disponible dans ce mode.

Lorsque le mode économique est activé par le contrôleur, la ou les machines électriques fonctionnent en mode moteur afin de délivrer une puissance mécanique additionnelle à des fins économiques. Cette puissance mécanique additionnelle est déterminée, par exemple, pour que la puissance à fournir par le ou les moteurs thermiques soit une puissance réduite permettant une diminution de la consommation de carburant avec un rendement acceptable. L'assistance à l'autorotation est aussi disponible. La puissance réduite peut être prédéterminée ou peut dépendre de la puissance développée par la machine électrique.

Quel que soit le mode de fonctionnement choisi et le cas de vol, un mode de fonctionnement en autorotation est donc toujours disponible. En cas de panne des moteurs thermiques ou à la demande du pilote à l'aide d'une interface adéquate, la ou les machines électriques basculent, sur ordre du contrôleur, dans le mode moteur pour une assistance à l'autorotation.

Ainsi, selon l'invention, ledit au moins un organe rotatif comprend une voilure tournante, ledit procédé comportant une détermination d'une panne du système thermique le rendant inopérant et une détermination d'une vitesse de rotation de la voilure tournante, ledit procédé comportant une commande, avec le contrôleur, du fonctionnement en mode moteur de ladite au moins une machine électrique en présence d'une dite panne et d'une dite vitesse de rotation supérieure à zéro.

L'expression « panne du système thermique le rendant inopérant » signifie que le système thermique n'est plus en mesure de mettre en mouvement la chaîne de transmission de puissance. Une telle panne peut être déterminée de manière usuelle à l'aide d'un calculateur de surveillance, par exemple un calculateur moteur, transmettant l'information de panne au contrôleur.

Eventuellement, le contrôleur peut transmettre un signal d'alerte d'autorotation à un alerteur dans ces conditions.

Le procédé comporte en outre les étapes suivantes : comparaison de la vitesse de rotation à une vitesse d'autorotation mémorisée, commande avec le contrôleur de ladite au moins une machine électrique pour délivrer une puissance auxiliaire maximale en mode moteur si ladite vitesse de rotation est inférieure à ladite vitesse d'autorotation, commande avec le contrôleur de ladite au moins une machine électrique pour délivrer en mode moteur une puissance inférieure à ladite puissance auxiliaire maximale si ladite vitesse de rotation est supérieure ou égale à ladite vitesse d'autorotation.

La puissance auxiliaire maximale est la puissance la plus élevée pouvant être développée par une machine électrique.

Si la vitesse de rotation est inférieure à ladite vitesse d'autorotation, la ou les machines électriques injectent un maximum de puissance dans la chaîne de transmission de puissance pour placer l'aéronef dans la configuration d'autorotation requise.

Dans la négative, la ou les machines électriques injectent une puissance plus basse dans la chaîne de transmission de puissance afin d'agrandir le cône d'autorotation et d'augmenter la surface d'une zone d'atterrissage atteignable.

Selon une possibilité compatible avec les précédentes, le procédé peut comporter une détection d'un dysfonctionnement dudit système électrique, ladite phase d'hybridation étant interdite en présence dudit dysfonctionnement, et donc au contraire autorisée en cas d'absence dudit dysfonctionnement.

Eventuellement, le contrôleur peut transmettre un signal d'alerte à un alerteur pour signaler le dysfonctionnement du système électrique.

Selon une possibilité compatible avec les précédentes, le procédé peut comporter une mesure d'une capacité électrique de ladite source d'énergie électrique, ladite phase d'hybridation étant interdite en présence d'une capacité électrique mesurée inférieure à un seuil de capacité électrique, ledit procédé comportant une commande avec ledit contrôleur d'une dite phase de recharge de ladite source d'énergie électrique en commandant le fonctionnement en mode générateur électrique de ladite machine électrique lorsque ladite capacité électrique mesurée est inférieure ou égale au seuil de capacité électrique.

Eventuellement, le contrôleur peut transmettre un signal d'alerte de basse capacité électrique à un alerteur dans ces conditions.

Lorsque la ou les machines électriques fonctionnent en mode moteur, ces machines électriques sont arrêtées avant de basculer dans le mode générateur électrique pour le rechargement électrique de la source d'énergie électrique.

Selon une possibilité compatible avec les précédentes, ledit au moins un organe rotatif pouvant comprendre une voilure tournante, ledit procédé peut comporter une mesure d'une vitesse de rotation de la voilure tournante, ladite phase d'hybridation étant interdite par le contrôleur en présence d'une vitesse de rotation mesurée n'appartenant pas à une plage de référence de vitesse de rotation.

La plage de référence de vitesse de rotation peut être fixée et mémorisée dans le contrôleur ou peut être variable. Par exemple, un calculateur moteur ou autre transmet au contrôleur la valeur d'une vitesse de référence variable, la plage de référence de vitesse de rotation étant fonction de cette vitesse de référence. A titre illustratif, la plage de référence de vitesse de rotation peut être égale à la valeur de la vitesse de référence plus ou moins un pourcent.

Eventuellement, le contrôleur peut transmettre un signal d'alerte de basse vitesse de rotation de la voilure tournante à un alerteur lorsque la vitesse de rotation mesurée n'appartient pas à la plage de référence de vitesse de rotation. Lorsque la ou les machines électriques fonctionnent en mode moteur, ces machines électriques sont arrêtées.

Selon une possibilité compatible avec les précédentes, ledit au moins un moteur thermique pouvant être piloté par un calculateur moteur, ledit calculateur moteur peut comprendre un mode automatique durant lequel ledit calculateur moteur annexe la puissance délivrée par le moteur thermique contrôlé à une vitesse de rotation dudit au moins un organe rotatif.

Le mode automatique du calculateur moteur permet de réguler automatiquement la puissance développée par un moteur thermique en fonction du fonctionnement de la ou des machines électriques.

Selon une possibilité compatible avec les précédentes, le procédé peut comporter une étape de détermination du mode appliqué par le calculateur moteur, ladite phase d'hybridation étant autorisée par le contrôleur uniquement lorsque ledit calculateur moteur fonctionne selon ledit mode automatique.

Eventuellement, le contrôleur peut transmettre un signal d'alerte d'interdiction de la phase d'hybridation à un alerteur. Lorsque la ou les machines électriques fonctionnent en mode moteur, ces machines électriques sont arrêtées.

Selon une possibilité compatible avec les précédentes, durant la phase d'hybridation, le procédé peut comporter une détermination d'une puissance disponible pouvant être développée par le système thermique.

Une telle puissance disponible peut être déterminée de manière usuelle, à l'aide d'une loi mémorisée par exemple, dans le contrôleur ou dans un autre organe. Cette caractéristique permet d'adapter le contrôle de la ou des machines électriques en fonction de la puissance maximale susceptible d'être développée par le ou le cas échéant les moteurs thermiques.

Selon une possibilité compatible avec les précédentes, lorsque ladite altitude-densité courante est supérieure à ladite altitude-densité seuil et ledit mode de fonctionnement choisi est le mode performant, le procédé peut comporter les étapes suivantes :

- détermination avec le contrôleur que ladite puissance nécessaire est comprise ou n'est pas comprise dans une plage de test allant de ladite puissance disponible pouvant être développée par le système thermique jusqu'à une puissance limite maximale acceptable par ladite chaîne de transmission de puissance, ladite puissance disponible et ladite puissance limite maximale étant respectivement exclues de ladite plage de test,

- application avec le contrôleur du mode performant lorsque ladite puissance nécessaire est comprise dans ladite plage de test,

- application avec le contrôleur du mode de veille lorsque ladite puissance nécessaire est en dehors de ladite plage de test.

Même si le mode performant est sélectionné, le contrôleur met en oeuvre le mode de veille si la puissance nécessaire n'est pas dans la plage de test mémorisée afin de ne pas dépasser la puissance limite maximale acceptable par ladite chaîne de transmission de puissance.

Selon une possibilité compatible avec les précédentes, lorsque ladite altitude-densité courante est supérieure à ladite altitude-densité seuil et ledit mode de fonctionnement choisi est le mode économique, le procédé peut comporter les étapes suivantes:

- détermination avec le contrôleur que ladite puissance nécessaire est inférieure ou supérieure ou égale à ladite puissance disponible pouvant être développée par le système thermique,

- application avec le contrôleur du mode économique lorsque ladite puissance nécessaire est inférieure à la puissance disponible,

- application avec le contrôleur du mode de veille lorsque ladite puissance nécessaire est supérieure ou égale à la puissance disponible.

Même si le mode économique est sélectionné, le contrôleur met en oeuvre le mode de veille si la puissance nécessaire est supérieure ou égale à la puissance disponible.

Selon une possibilité compatible avec les précédentes, lorsque ladite altitude-densité courante est inférieure ou égale à ladite altitude-densité seuil et ledit mode de fonctionnement choisi est le mode économique, le procédé peut comporter:

- détermination avec le contrôleur que ladite puissance nécessaire est inférieure ou supérieure ou égale à une puissance limite maximale acceptable par ladite chaîne de transmission de puissance,

- application avec le contrôleur du mode économique lorsque ladite puissance nécessaire est inférieure à la puissance limite maximale,

- application avec le contrôleur du mode de veille lorsque ladite puissance nécessaire est supérieure ou égale à la puissance limite maximale.

Selon une possibilité compatible avec les précédentes, lors du mode économique choisi parmi lesdits plusieurs modes de fonctionnement, le procédé peut comporter une commande avec le contrôleur de ladite au moins une machine électrique pour fournir en mode moteur une puissance égale au produit d'une fonction de transfert économique avec soit une puissance économique, soit une différence entre la puissance nécessaire et une puissance réduite prédéterminée.

La puissance développée par une machine électrique durant le mode économique peut être fixe, prédéterminée ou variable.

La puissance économique peut être mémorisée ou paramétrée par un pilote ou un copilote, à l'aide d'une interface homme-machine transmettant un signal au contrôleur porteur d'une valeur de la puissance économique.

Selon une possibilité compatible avec les précédentes, lors du mode performant choisi parmi lesdits plusieurs modes de fonctionnement, le procédé peut comporter une commande avec le contrôleur de ladite au moins une machine électrique pour fournir en mode moteur une puissance égale au produit d'une fonction de transfert performante avec soit une puissance performante , soit une différence entre une puissance limite maximale prédéterminée acceptable par ladite chaîne de transmission de puissance et la puissance nécessaire.

La puissance développée par une machine électrique durant le mode performant peut être fixe, prédéterminée ou variable.

La puissance performante peut être mémorisée ou paramétrée par un pilote ou un copilote, à l'aide d'une interface homme-machine transmettant un signal au contrôleur porteur d'une valeur de la puissance performante.

Selon une possibilité compatible avec les précédentes, une phase de recharge peut comporter les étapes suivantes :

- détermination qu'une vitesse d'avancement dudit giravion est comprise dans une plage de vitesse d'avancement mémorisée,

- détermination qu'une capacité électrique de ladite source d'énergie électrique est inférieure à un seuil de recharge,

- tant que ladite vitesse d'avancement dudit giravion est comprise dans ladite plage de vitesse d'avancement et que la capacité électrique de ladite source d'énergie électrique est inférieure au seuil de recharge, recharge de ladite source d'énergie électrique en contrôlant avec le contrôleur ladite au moins une machine électrique en mode générateur électrique.

La recharge en énergie électrique est ainsi effectuée que lorsque l'aéronef évolue à une vitesse nécessitant un minimum de puissance mécanique.

Le seuil de recharge peut être supérieur au seuil de capacité électrique.

L'invention vise aussi un giravion muni d'au moins un organe rotatif, ledit giravion comprenant une installation motrice thermique et électrique pour mettre en mouvement ledit au moins un organe rotatif, ladite installation motrice comprenant un système thermique et un système électrique pour mettre en mouvement une chaîne de transmission de puissance reliée audit au moins un organe rotatif , le système thermique ayant au moins un moteur thermique et le système électrique étant muni d'au moins une machine électrique , ledit système électrique ayant une source d'énergie électrique reliée électriquement à ladite au moins une machine électrique.

Le giravion comporte un sélecteur pour sélectionner un mode de fonctionnement choisi parmi plusieurs modes de fonctionnement, ledit giravion comprenant un contrôleur relié au sélecteur ainsi qu'à un senseur d'une altitude-densité et à un senseur d'une puissance nécessaire à fournir à ladite chaîne de transmission de puissance, ledit contrôleur étant configuré pour commander ladite au moins une machine électrique en appliquant le procédé de l'invention.

L'altitude-densité n'est pas à confondre avec une altitude ou une densité, mais correspond à l'altitude-pression corrigée de l'effet de la température. L'altitude-densité est calculée de manière usuelle à partir par exemple de la pression atmosphérique, mesurée avec un baromètre ou autres, et une température mesurée avec un thermomètre ou autres capteurs de température.

L'invention et ses avantages apparaîtront avec plus de détails dans le cadre de la description qui suit avec des exemples donnés à titre illustratif en référence aux figures annexées qui représentent :

la figure 1, une vue d'un aéronef selon l'invention,

la figure 2, un schéma illustrant un exemple de procédé permettant d'initier la phase d'hybridation,

la figure 3, un schéma illustrant un exemple de phase d'autorotation,

la figure 4, un schéma illustrant un exemple de phase d'hybridation à haute altitude-densité,

la figure 5, un schéma illustrant un exemple de phase d'hybridation à basse altitude-densité,

la figure 6, un schéma illustrant un exemple de phase de recharge,

la figure 7, un schéma illustrant la phase d'hybridation avec une ou des machines électriques délivrant une puissance mécanique variable en mode moteur, et

la figure 8, un schéma illustrant la phase d'hybridation avec une ou des machines électriques délivrant une puissance mécanique constante en mode moteur.

Les éléments présents dans plusieurs figures distinctes sont affectés d'une seule et même référence.

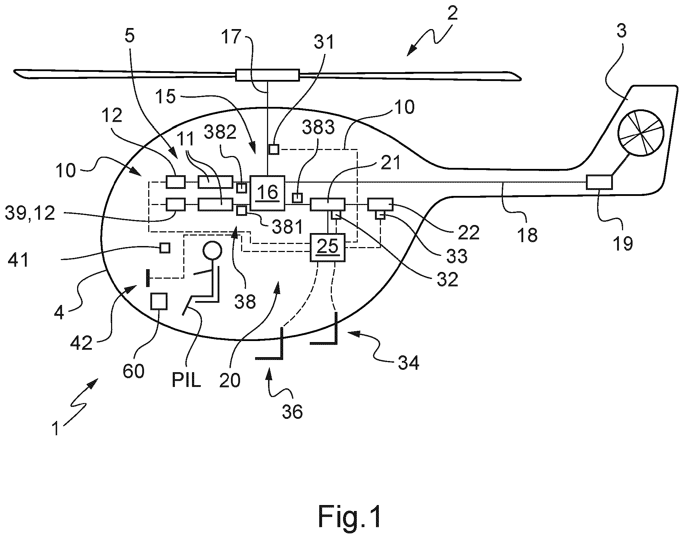

La figure 1 représente un giravion 1 selon l'invention. Ce giravion comporte au moins un organe rotatif 2, 3. Chaque organe rotatif 2,3 peut participer au déplacement ou à la sustentation de cet aéronef. Par exemple, le giravion 1 comporte un organe rotatif prenant la forme d'une voilure tournante 2 portée par une cellule 4. Le giravion 1 peut en outre comprendre au moins une hélice et/ou au moins un rotor arrière 3 participant au contrôle du lacet de la cellule 4. Pour mettre en mouvement le ou les organes rotatifs 2, 3 le giravion 1 comporte une installation motrice 5 thermique et électrique. L'installation motrice 5 comporte ainsi une chaîne de transmission de puissance 15 reliée au ou aux organes rotatifs 2, 3. Une telle chaîne de transmission de puissance 15 peut comprendre une ou plusieurs boîtes de transmission de puissance, un ou plusieurs arbres, des moyens de connexion... Selon l'exemple illustré, la chaîne de transmission de puissance 15 comporte une boîte de transmission de puissance principale 16 mettant en mouvement un mât rotor 17 relié à la voilure tournante 2. De plus, la chaîne de transmission de puissance 15 comporte au moins un arbre 18 reliant la boîte de transmission de puissance principale 16 à une boîte de transmission de puissance arrière 19 entraînant en rotation un rotor arrière 3.

Dès lors, l'installation motrice 5 comporte un système thermique 10 muni d'un ou plusieurs moteurs thermiques 11 mettant en mouvement la chaîne de transmission de puissance 15, et en particulier des organes internes de la boîte de transmission de puissance principale 16 selon l'exemple illustré. Indépendamment du nombre de moteurs thermiques, chaque moteur thermique est par exemple contrôlé par son propre calculateur moteur 12. En présence de plusieurs moteurs thermiques 11, les calculateurs moteur 12 peuvent communiquer entre eux. De plus, chaque moteur thermique 11 peut être par exemple un turbomoteur ou bien un moteur à pistons.

En outre, l'installation motrice 5 comporte un système électrique 20. Ce système électrique 20 comprend une ou plusieurs machines électriques 21 pouvant fonctionner en mode moteur pour mettre en mouvement la chaîne de transmission de puissance 15, directement ou indirectement. Par exemple, une machine électrique 21 peut être en prise sur la chaîne de transmission de puissance 15, et en particulier sur la boîte de transmission de puissance principale 16 selon l'exemple illustré, ou sur un moteur thermique 11.

Chaque machine électrique 21, et indépendamment du nombre de machines électriques 21, peut aussi fonctionner en mode générateur électrique, de manière à produire une énergie électrique en étant mise en mouvement par la chaîne de transmission de puissance ou par un moteur thermique 11.

Le terme « chaque» associé à un objet peut être utilisé indépendamment du nombre d'objets et peut être assimilé à l'expression « le ou le cas échéant les ».

Chaque machine électrique 21 est reliée à une source d'énergie électrique 22. Cette source d'énergie électrique 22 est rechargeable de manière à alimenter électriquement chaque machine électrique 21 fonctionnant en mode moteur et à être alimentée électriquement par chaque machine électrique 21 fonctionnant en mode générateur électrique. La source d'énergie électrique 22 peut comprendre de manière usuelle des batteries ou équivalents, une pile à hydrogène ou équivalent...

Par ailleurs, le giravion 1 comporte un contrôleur 25 en communication avec notamment chaque machine électrique 21 afin de leur transmette un signal de commande indiquant de quelle manière elles doivent fonctionner.

Le contrôleur 25 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur... Le contrôleur 25 peut comprendre par exemple un ou plusieurs calculateurs dédiés ou non au procédé de l'invention. Plusieurs calculateurs du système peuvent former un même calculateur, et par exemple le contrôleur 25 ainsi que le calculateur de surveillance 39 évoqué par la suite. Par exemple, le contrôleur 25 fait partie d'un ensemble dénommé « Aircraft Management Computer » en langue anglaise.

Le giravion 1 comporte un senseur 34 d'une altitude-densité usuel en communication filaire ou non filaire avec le contrôleur 25. Le terme senseur utilisé par la suite peut désigner un ensemble comprenant un ou plusieurs capteurs voire un calculateur. Ainsi, un senseur 34 d'une altitude-densité peut comprendre un altimètre et un thermomètre par exemple. Le senseur 34 d'une altitude-densité émet vers le contrôleur 25 un signal porteur de l'altitude-densité courante Zt.

Le giravion 1 peut aussi comprendre un senseur de puissance mécanique 32 déterminant une puissance mécanique Pwe développée ou prélevée par une machine électrique 21. Un tel senseur de puissance mécanique 32 peut comporter à titre d'exemple, pour chaque machine électrique 21, un couplemètre et un capteur de vitesse de rotation positionnés sur un arbre de puissance de la machine électrique 21. Selon un autre exemple, la consommation électrique voire le sens de rotation d'un tel arbre peuvent être mesurés et utilisés pour évaluer la puissance mécanique Pwe de manière usuelle. Par ailleurs, au moins un capteur de surveillance usuel est configuré pour déterminer si la machine fonctionne correctement, tel qu'un capteur mesurant une intensité électrique comparée à une référence. Chaque capteur de surveillance peut émettre un signal de surveillance porteur d'une information indiquant si la machine électrique est en panne, directement ou indirectement vers le contrôleur.

Le giravion 1 peut aussi comprendre un senseur 33 de capacité électrique mesurant la capacité électrique courante C de la source d'énergie électrique 22.

Le giravion 1 peut aussi comprendre un senseur de vitesse d'avancement 36 mesurant une vitesse de déplacement du giravion 1. Par exemple, un tel senseur 36 comporte un système de positionnement par satellites, un système à tube de Pitot,... Par exemple, la vitesse d'avancement est la vitesse air vraie dénommée « True Air Speed » en langue anglaise.

Le giravion 1 peut aussi comprendre un senseur de vitesse de rotation 31 mesurant la vitesse d'un organe tournant de l'installation motrice 5, et notamment d'un organe rotatif ou d'un organe mobile conjointement avec un organe rotatif. Par exemple, un senseur de vitesse de rotation 31 mesure la vitesse de rotation du mât rotor 17 image de la vitesse de rotation de la voilure tournante 2. Le senseur de vitesse de rotation 31 peut transmettre un signal porteur de la vitesse de rotation Nr vers le contrôleur 25 mais aussi vers chaque calculateur moteur 12.

En effet, un calculateur moteur 12 peut piloter le moteur thermique 11 associé de manière usuelle, durant un mode automatique, en fonction d'une vitesse de référence, fixe ou variable, et d'une vitesse de rotation Nr mesurée par le senseur de vitesse de rotation 31, et notamment en fonction d'une vitesse de rotation Nr de la voilure tournante. La puissance développée par un moteur thermique 11 peut alors varier automatiquement en fonction de la puissance développée ou prélevée par une machine électrique 21. La puissance développée par un moteur thermique 11 est de plus bornée pour ne pas dépasser une puissance limite du moteur variant en fonction de l'altitude-densité et pour que la puissance transmise par la chaîne de transmission de puissance 15 ne dépasse pas une puissance limite maximale Lbtp.

En présence d'un unique moteur thermique, la puissance disponible Pwdt est égale à la puissance limite du moteur thermique. En présence de plusieurs moteurs thermiques, la puissance disponible Pwdt est égale à la somme des puissances limites des moteurs.

La puissance disponible Pwdt peut être déterminée par un estimateur à l'aide d'une loi mémorisée fournissant cette puissance disponible Pwdt en fonction de l'altitude-densité. L'estimateur peut être le contrôleur 25, ou un autre organe transmettant un signal au contrôleur 25 porteur de cette puissance disponible Pwdt par exemple.

Le giravion 1 peut comprendre un senseur 38 usuel d'une puissance nécessaire WNEC à fournir à la chaîne de transmission de puissance. Par exemple, le senseur 38 d'une puissance nécessaire peut comprendre un ou plusieurs senseurs de puissance 381, 382, 383 disposés sur la chaîne de transmission de puissance 15 ou sur un arbre de travail d'un moteur thermique voire d'une machine électrique. Un senseur de puissance peut comprendre un couplemètre et un capteur de vitesse de rotation par exemple. Selon l'exemple illustré, le senseur 38 d'une puissance nécessaire peut comprendre un senseur de puissance 381, 382, 383 à la sortie de chaque moteur thermique et de chaque machine électrique. La puissance nécessaire est alors calculée par un évaluateur en réalisant la somme des puissances mesurées. L'évaluateur peut être le contrôleur 25 ou un organe usuel.

Le giravion peut comporter un calculateur de surveillance 39 configuré pour déterminer si le ou les moteurs thermiques sont en panne. Par exemple, le calculateur de surveillance 39 est un calculateur moteur 12. Le calculateur de surveillance transmet le cas échéant un signal au contrôleur 25 porteur d'une panne rendant inopérant le système thermique 10.

Eventuellement, le giravion 1 peut comporter une interface homme-machine 41 reliée à chaque calculateur moteur 12 pour requérir la mise en oeuvre du mode automatique de régulation du moteur thermique 11 correspondant.

Eventuellement, le giravion 1 peut comporter une interface homme-machine 41 reliée au contrôleur 25 pour paramétrer une puissance performante Psperfo et/ou une puissance économique Pseco. La puissance performante Psperfo peut être supérieure à la puissance économique Pseco

Eventuellement, le contrôleur 25 peut communiquer avec un alerteur 60 pour générer une alerte. Un tel alerteur 60 peut comprendre un écran affichant un message, et/ou un moyen sonore et par exemple un haut parleur, et/ou une lampe,...

Selon un autre aspect, le giravion 1 comporte un sélecteur 42 en communication filaire ou non filaire avec le contrôleur 25 pour choisir un mode de fonctionnement. Le sélecteur 42 transmet un signal porteur d'un mode fonctionnement choisi. Par exemple, le sélecteur 42 peut comprendre un bouton à plusieurs positions, une dalle tactile... En particulier, le sélecteur 42 peut permettre à un pilote Pil de sélectionner un mode de fonctionnement parmi un mode de veille MODV, un mode performant MODPERF et un mode économique MODECO.

Lorsque le mode de veille MODV est mis en oeuvre par le contrôleur 25, la ou les machines électriques 21 sont le cas échéant arrêtées, ou si nécessaire au moins une machine électrique 21 est pilotée en mode générateur électrique pour recharger la source d'énergie électrique 22 durant une phase de recharge STPRECHARGE, par exemple en appliquant une fonction Fr(t) .

Lorsque le mode économique MODECO est mis en oeuvre par le contrôleur 25, au moins une voire chaque machine électrique 21 fonctionne en mode moteur afin que le ou les moteurs thermiques 11 délivrent une puissance réduite, par exemple prédéterminée Ptm.

Lorsque le mode performant MODPERF est mis en oeuvre par le contrôleur 25, au moins une voire chaque machine électrique 21 fonctionne en mode moteur et le ou les moteurs thermiques 11 délivrent une puissance pouvant atteindre la puissance disponible.

A tout moment et quel que soit le mode de fonctionnement choisi, le contrôleur 25 peut mettre en oeuvre un mode de fonctionnement en autorotation.

Dès lors, le procédé de l'invention requiert la sélection STPSELECT d'un mode de fonctionnement choisi en manoeuvrant le sélecteur 42. Lors d'une phase d'hybridation, le contrôleur 25 compare en outre l'altitude-densité courante Zt à une altitude-densité seuil Zs mémorisée. Par suite, le contrôleur 25 pilote chaque machine électrique 21 en fonction du mode de fonctionnement choisi, de la valeur de l'altitude-densité courante Zt au regard de l'altitude-densité seuil Zs ainsi que de la puissance nécessaire Wnec. A cet effet, le contrôleur 25 transmet un signal de commande à une machine électrique 21 pour la piloter, ce signal de commande étant porteur d'une puissance à fournir ou à prélever par la machine électrique 21.

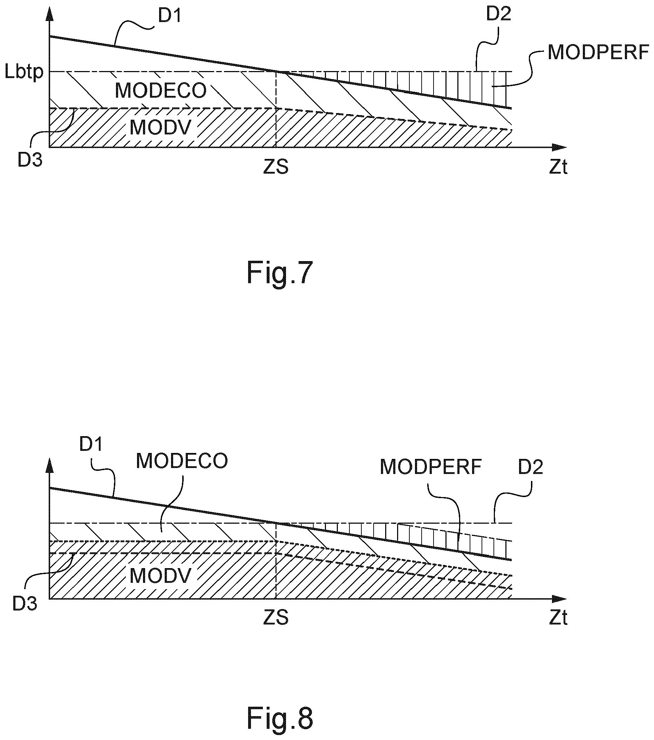

Les figures 7 et 8 illustrent des diagrammes présentant une puissance en ordonnée et une altitude-densité en abscisse. Un trait D1 illustre la puissance disponible pouvant être développée par le ou les moteurs thermiques 11 conjointement. Un trait horizontal D2 représente la puissance limite maximale Lbtp admissible par la chaîne de transmission de puissance 15. Une ligne D3 représente une puissance réduite prédéterminée Ptm optimisant le fonctionnement du ou des moteurs thermiques 11. Selon la figure 7, la ou les machines électriques 21 peuvent fournir une puissance variable en fonction du besoin alors que, selon la figure 8, la ou les machines électriques 21 fournissent une puissance mémorisée ou paramétrée par un pilote ou un copilote. Les diagrammes sont fournis à titre illustratif uniquement.

En référence à la figure 7, lorsque l'altitude-densité courante Zt est supérieure à une altitude-densité seuil Zs, tous les modes de fonctionnement sont accessibles. Le contrôleur 25 détermine le mode à appliquer en fonction du mode de fonctionnement choisi, de la puissance nécessaire Wnec voire de la puissance disponible Pwdt. Durant le mode de veille MODV, chaque machine électrique 21 est éteinte ou en mode générateur électrique.

Durant le mode économique MODECO, chaque machine électrique 21 peut fonctionner en mode moteur pour fournir une puissance mécanique Pwe. Selon la figure 7, la puissance mécanique Pwe est réglée par le contrôleur 25 pour que le ou les moteurs thermiques 11 fournissent automatiquement une puissance réduite Ptm et pour ne pas dépasser la puissance limite maximale. Selon la figure 8, la puissance mécanique Pwe est fixe, la puissance réduite étant alors variable.

Durant le mode performant MODPERF, le ou les moteurs thermiques 11 sont pilotés pour fournir la puissance thermique maximale et la ou les machines électriques 21 fonctionnent en mode moteur pour fournir une puissance complémentaire dans la limite de la puissance limite maximale Lbtp admissible par la chaîne de transmission de puissance 15.

Lorsque l'altitude-densité courante Zt est inférieure ou égale à l'altitude-densité seuil Zs, si le mode fonctionnement choisi est le mode performant MODPERF, le contrôleur 25 applique le mode de veille MODV.

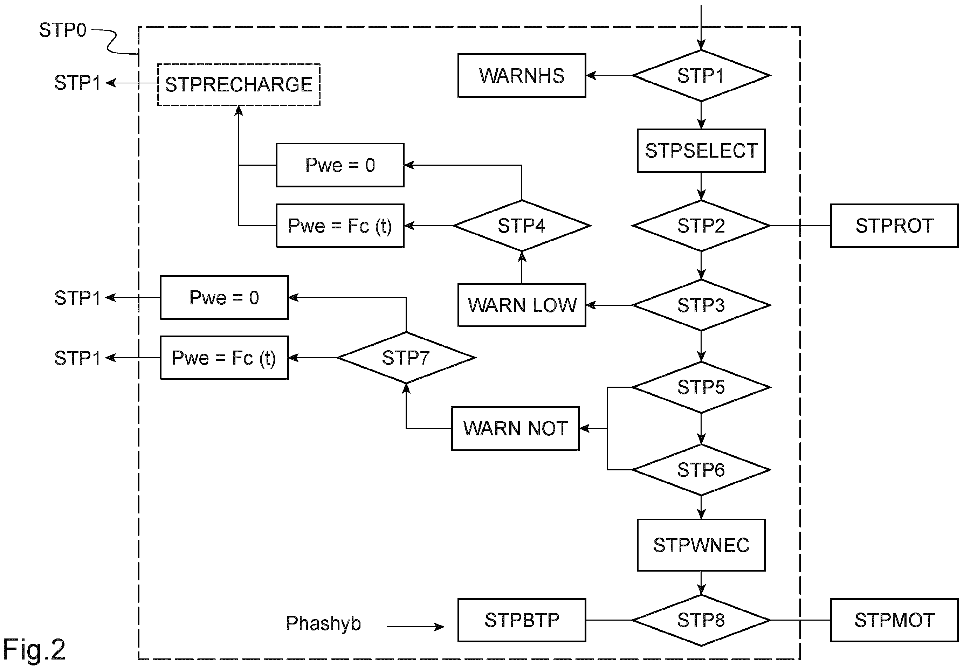

Dès lors et quelle que soit la manière de réaliser le giravion 1, le contrôleur 25 peut ainsi réaliser en boucle des étapes du procédé. Les figures 2 à 6 décrivent des étapes possibles d'une boucle.

Ainsi, selon la figure 2, le procédé peut comprendre une phase de test STP0 pour déterminer si la phase d'hybridation Phashyb ou si une phase d'autorotation STPROT doivent être entreprises. Des étapes décrites sont éventuellement optionnelles et sont éventuellement réalisées dans un autre ordre, voire de manière simultanée.

La phase d'hybridation Phashyb peut notamment être conditionnée à un fonctionnement normal du système électrique 20.

Dès lors, le procédé peut comprendre une détection STP1 d'un dysfonctionnement du système électrique 20. Par exemple, chaque machine électrique 21, voire la source d'énergie électrique 22, peuvent comprendre des capteurs de surveillance usuels pour déterminer la présence d'une panne. Ces capteurs de surveillance communiquent avec le contrôleur 25. Si un capteur de surveillance transmet durant une boucle un signal porteur d'une panne au contrôleur 25, le contrôleur 25 ne met pas en oeuvre la phase d'hybridation Phashyb. Par contre, le contrôleur 25 peut piloter un alerteur 60 pour générer une alerte WARNHS. La boucle du procédé s'arrête et une nouvelle boucle commence.

La détection STP1 d'un dysfonctionnement du système électrique 20 peut éventuellement être réalisée à l'initiation de la boucle car, en cas de dysfonctionnement, le système électrique 20 ne peut pas être utilisé.

Par ailleurs, la boucle peut comprendre une étape pour déterminer si une phase d'autorotation STPROT doit être initiée. Cette étape peut être réalisée après l'étape de détection du dysfonctionnement en raison de son importance.

Ainsi le procédé peut comporter la détermination STP2 d'une panne du système thermique 10 le rendant inopérant. En l'absence d'une telle panne, la boucle se poursuit. En présence d'une telle panne, une phase d'autorotation STPROT débute.

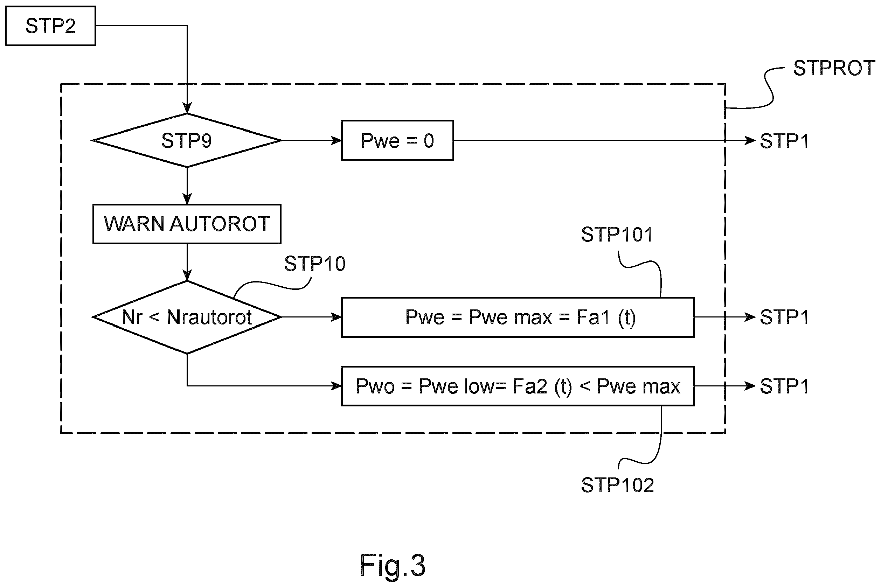

En référence à la figure 3 et durant une phase d'autorotation STPROT, le procédé comporte la détermination STP9 par le contrôleur 25 que la vitesse de rotation Nr mesurée est supérieure à zéro. A cet effet, le contrôleur 25 compare la vitesse de rotation Nr mesurée à zéro. Si la vitesse de rotation Nr mesurée est égale à zéro, le giravion est à l'arrêt. Chaque machine électrique 21 reste à l'arrêt en fournissant une puissance mécanique Pwe nulle. La boucle du procédé s'arrête et une nouvelle boucle commence.

Si la vitesse de rotation Nr mesurée est différente de zéro, au moins une voire chaque machine électrique 21 est pilotée par le contrôleur 25 pour fonctionner en mode moteur.

Le procédé comporte la comparaison STP10 avec le contrôleur 25 de la vitesse de rotation Nr à une vitesse d'autorotation Nrautorot mémorisée. Dès lors, le contrôleur 25 commande, lors d'une étape STP101, au moins une voire chaque machine électrique 21 pour délivrer à la chaîne de transmission de puissance 15 une puissance mécanique Pwe égale à une puissance auxiliaire maximale Pwemax en mode moteur si la vitesse de rotation Nr est inférieure à la vitesse d'autorotation Nrautorot. La puissance auxiliaire maximale Pwemax peut être obtenue à l'aide d'une première fonction de transfert en autorotation Fa1(t). Toute la puissance de la machine électrique est utilisée pour faciliter l'autorotation. La boucle du procédé s'arrête et une nouvelle boucle commence.

A contrario, le contrôleur 25 commande, lors d'une étape STP102, au moins une voire chaque machine électrique 21 pour délivrer en mode moteur une puissance modérée Pwelow inférieure à ladite puissance auxiliaire maximale Pwemax si la vitesse de rotation Nr est supérieure ou égale à ladite vitesse d'autorotation Nrautorot. La puissance modérée Pwelow peut être obtenue à l'aide d'une deuxième fonction de transfert en autorotation Fa2(t). La boucle du procédé s'arrête et une nouvelle boucle commence.

Ce procédé permet d'injecter automatiquement le maximum de puissance à la chaîne de transmission de puissance 15 au moment de la phase d'atterrissage dénommée « flare » en langue anglaise.

En référence à la figure 2, la phase de test STP0 peut comprendre une mesure STP3 de la capacité électrique courante C de la source d'énergie électrique 22 avec le senseur 33 de capacité électrique. Si le contrôleur 25 détermine que la capacité électrique courante C est inférieure à un seuil de capacité électrique C1, alors le contrôleur 25 ne met pas en oeuvre la phase d'hybridation. Eventuellement le contrôleur 25 pilote l'alerteur 60 pour émettre une alerte WARNLOW. Eventuellement, le contrôleur 25 pilote alors au moins une voire chaque machine électrique 21 pour recharger électriquement la source d'énergie électrique 22 lors d'une phase de recharge STPRECHARGE.

Préalablement, le contrôleur 25 peut déterminer lors d'une étape de vérification STP4, si une machine électrique 21 fonctionne en mode moteur, par exemple à l'aide du senseur de puissance mécanique 32. Dans l'affirmative, le contrôleur 25 transmet un signal à la machine électrique 21 pour l'arrêter, par exemple en appliquant une fonction de transfert d'arrêt mémorisée Fc(t). Débute alors la phase de recharge STPRECHARGE.

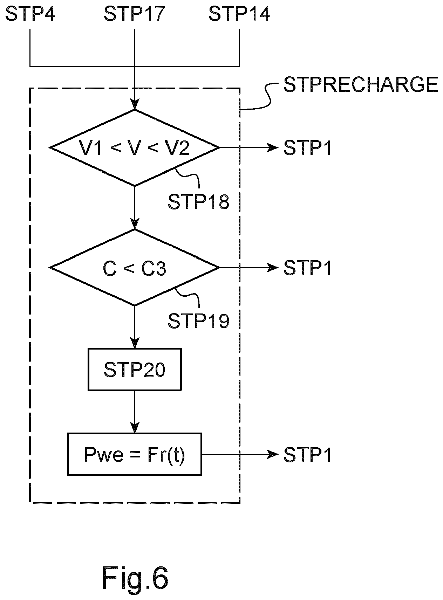

La figure 6 illustre un exemple de phase de recharge STPRECHARGE. Eventuellement, le contrôleur 25 peut déterminer lors d'une étape STP18 si la vitesse d'avancement V du giravion 1 est comprise dans une plage de vitesse d'avancement mémorisée à l'aide du senseur de vitesse d'avancement 36. Par exemple cette plage est délimitée entre une vitesse basse supérieure à la vitesse du meilleur taux de montée Vy et une vitesse haute. La vitesse haute peut être la vitesse de croisière du giravion, dénommée aussi « vitesse recommandée de transit ». Le contrôleur 25 peut, à cet effet, recevoir du senseur 36 de vitesse d'avancement un signal porteur de la vitesse d'avancement. Dans la négative, la recharge ne peut pas être effectuée et une autre boucle débute.

Eventuellement, le contrôleur 25 peut déterminer, lors d'une étape STP19, si la capacité électrique courante C de la source d'énergie électrique 22 est inférieure à un seuil de recharge C3. Le contrôleur 25 peut, à cet effet, recevoir du senseur 33 de capacité électrique un signal porteur de la capacité électrique courante C. Dans la négative, la recharge ne peut pas être effectuée et une autre boucle débute.

Dès lors, tant que ladite vitesse d'avancement V est comprise dans ladite plage de vitesse d'avancement et que la capacité électrique courante C est inférieure au seuil de recharge C3, le contrôleur 25 pilote une étape de recharge STP20 de la source d'énergie électrique 22 en contrôlant une machine électrique 21 pour la faire fonctionner en mode générateur électrique. La boucle du procédé s'arrête alors et une nouvelle boucle commence.

En référence à la figure 2, la phase de test STEP0 peut comprendre une comparaison STP5 par le contrôleur 25 entre la vitesse de rotation Nr courante de la voilure tournante 2 et une plage de référence de vitesse de rotation. Le contrôleur 25 peut, à cet effet, recevoir du senseur 31 de vitesse de rotation un signal porteur de la vitesse de rotation Nr courante et peut mémoriser ou recevoir ou calculer la plage de référence de vitesse de rotation.

Si la vitesse de rotation Nr courante de la voilure tournante 2 n'appartient pas à la plage de référence de vitesse de rotation, la phase d'hybridation Phashyb est interdite par le contrôleur 25. La boucle du procédé s'arrête alors et une nouvelle boucle commence.

Eventuellement, le procédé peut comporter la détermination STP6 du mode appliqué par le calculateur moteur 12. Le contrôleur 25 peut, à cet effet, recevoir du calculateur moteur 12 ou de l'interface homme machine 41 un signal porteur du mode appliqué par le calculateur moteur 12. Si le calculateur moteur 12 ne fonctionne pas selon la mode automatique, la phase d'hybridation Phashyb est interdite par le contrôleur 25. La boucle du procédé s'arrête alors et une nouvelle boucle commence.

En présence d'une vitesse de rotation Nr différente de la plage de référence de vitesse de rotation ou d'un calculateur moteur 12 ne fonctionnant pas dans le mode automatique, le contrôleur 25 peut piloter l'alerteur 60 pour générer une alerte WARNNOT. Le contrôleur 25 peut déterminer, durant une étape de contrôle STP7, si une machine électrique 21 est en fonctionnement. Dans l'affirmative, le contrôleur 25 transmet un signal à la machine électrique 21 pour l'arrêter, par exemple en appliquant une fonction de transfert d'arrêt mémorisée Fc(t). La boucle du procédé s'arrête alors et une nouvelle boucle commence.

A tout moment, le procédé peut comporter une étape de sélection STPSELECT d'un mode de fonctionnement choisi parmi plusieurs modes de fonctionnement. Le pilote PIL manoeuvre alors le sélecteur 42 à cet effet. Le sélecteur 42 transmet un signal au contrôleur 25 porteur du mode de fonctionnement choisi.

A tout moment, le procédé peut comporter une étape STPWNEC de détermination de la puissance nécessaire Wnec. Le contrôleur 25 ou un calculateur moteur 12 par exemple peut déterminer la puissance nécessaire Wnec à fournir à la chaîne de transmission de puissance 15 pour assurer le vol.

A tout moment et par exemple au cours de l'étape STP8, le procédé peut comporter une étape de détermination de l'altitude-densité courante Zt. Le senseur 34 d'une altitude-densité transmet au contrôleur 25 un signal porteur de cette altitude-densité courante.

Si la phase d'hybridation Phashyb est autorisée, durant l'étape STP8, le contrôleur 25 effectue alors une comparaison entre l'altitude-densité courante Zt et une altitude-densité seuil Zs mémorisée.

En fonction notamment de cette comparaison, le contrôleur 25 détermine le signal à transmette à au moins une machine électrique 21 pour la commander.

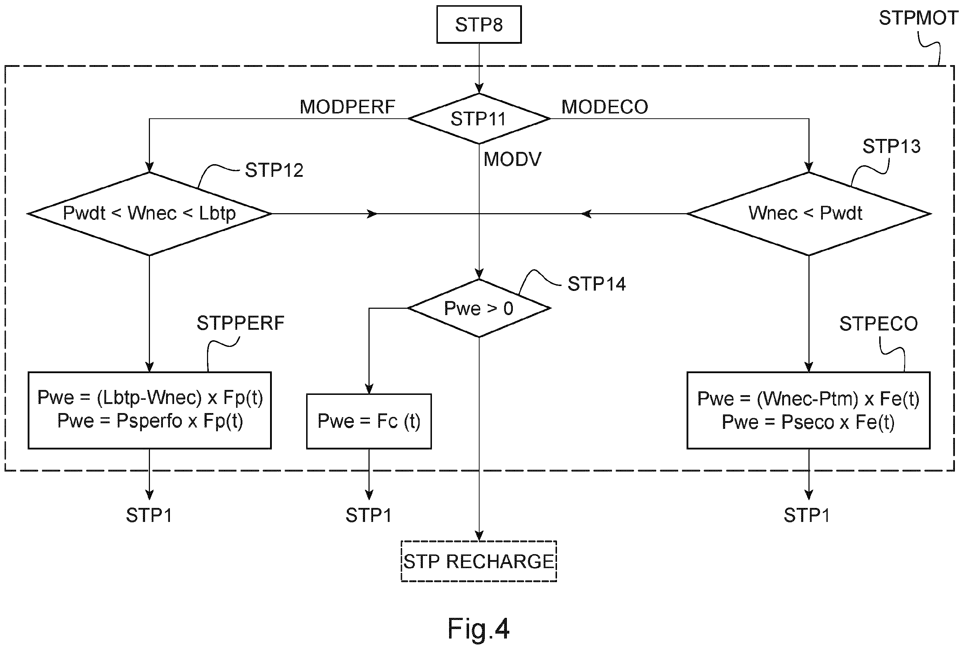

Si l'altitude-densité Zt courante est supérieure à ladite altitude-densité seuil Zs, le contrôleur 25 applique une phase de limite moteur STPMOT illustrée sur la figure 4. Durant une étape STP11, le contrôleur 25 détermine le mode de fonctionnement choisi en fonction du signal transmis par le sélecteur 42.

Si le mode de fonctionnement choisi est le mode performant MODPERF, le contrôleur 25 détermine durant une étape de détermination STP12 si la puissance nécessaire Wnec appartient à une plage de test en étant supérieure à la puissance disponible Pwdt et inférieure à la puissance limite maximale Lbtp. Dans l'affirmative, le contrôleur 25 transmet un signal à au moins une voire chaque machine électrique 21 pour appliquer le mode performant lors d'une étape STPPERF.

Lorsque le mode performant MODPERF est activé, le contrôleur 25 transmet un signal à une voire chaque machine électrique 21 pour qu'elle fournisse en mode moteur une puissance mécanique Pwe égale soit au produit d'une fonction de transfert performante Fp(t) et d'une puissance performante Psperfo, soit au produit d'une fonction de transfert performante Fp(t) et d'une différence entre puissance limite maximale Lbtp et la puissance nécessaire Wnec. Selon un exemple, le signal transmis par le contrôleur 25 à une machine électrique 21 est porteur de la puissance mécanique Pwe à fournir. La boucle est alors terminée et une nouvelle boucle débute.

Si la puissance nécessaire Wnec n'appartient pas à la plage de test, le contrôleur 25 transmet un signal à au moins une voire chaque machine électrique 21 pour appliquer le mode de veille MODV. Eventuellement une alerte est émise par l'alerteur pour en informer le pilote.

Durant le mode de veille, le contrôleur 25 détermine durant une étape STP14 si la machine électrique 21 fournit une puissance mécanique Pwe non nulle. Si la machine électrique 21 fournit une puissance mécanique Pwe non nulle, le contrôleur 25 transmet un signal à la machine électrique pour l'arrêter selon une fonction de transfert d'arrêt Fc(t). La boucle est alors terminée et une nouvelle boucle débute. Si la machine électrique 21 fournit une puissance mécanique Pwe nulle, une phase de recharge STPRECHARGE est initiée.

Si le mode de fonctionnement choisi est le mode économique MODECO, le procédé comporte la détermination STP13 avec le contrôleur 25 que la puissance nécessaire Wnec est inférieure ou supérieure ou égale à la puissance disponible Pwdt. Lorsque la puissance nécessaire Wnec est inférieure à la puissance disponible Pwdt, le contrôleur 25 transmet un signal à au moins une voire chaque machine électrique 21 pour mettre en oeuvre le mode économique MODECO. A l'inverse, le contrôleur 25 transmet un signal à au moins une voire chaque machine électrique 21 pour mettre en oeuvre le mode de veille MODV. Eventuellement une alerte est émise par l'alerteur pour en informer le pilote.

Lorsque le mode économique MODECO est activé, le contrôleur 25 peut transmettre un signal à une voire chaque machine électrique 21 pour qu'elle fournisse en mode moteur une puissance mécanique Pwe égale soit au produit d'une fonction de transfert économique Fe(t) et d'une puissance économique Pseco, soit au produit d'une fonction de transfert économique Fe(t) et d'une différence entre la puissance nécessaire Wnec et la puissance réduite Ptm prédéterminée. Selon un exemple, le signal transmis par le contrôleur 25 à une machine électrique 21 est porteur de la puissance mécanique Pwe à fournir. La boucle est alors terminée et une nouvelle boucle débute.

Si le mode de veille MODV est le mode de fonctionnement choisi, le contrôleur 25 transmet un signal à au moins une voire chaque machine électrique 21 pour mettre en oeuvre ce mode de veille MODV.

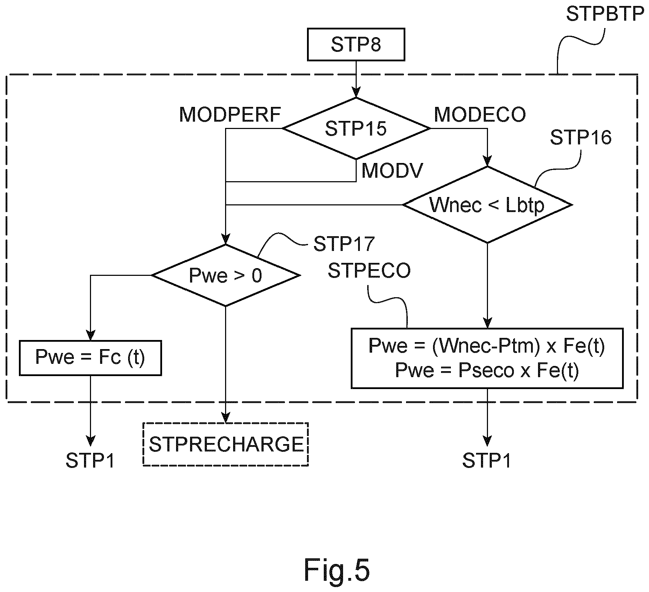

Si l'altitude-densité Zt courante est inférieure ou égale à l'altitude-densité seuil Zs, le contrôleur 25 applique une phase de limite de chaîne de transmission de puissance STPBTP illustrée sur la figure 5. Durant une étape STP15, le contrôleur 25 détermine le mode de fonctionnement choisi en fonction du signal transmis par le sélecteur 42.

Si le mode de fonctionnement choisi est le mode économique MODECO, le procédé comporte la détermination STP16 avec le contrôleur 25 que la puissance nécessaire Wnec est inférieure ou supérieure ou égale à la puissance limite maximale Lbtp. Lorsque la puissance nécessaire Wnec est inférieure à la puissance limite maximale Lbtp, le contrôleur 25 transmet un signal à au moins une voire chaque machine électrique 21 pour mettre en oeuvre le mode économique MODECO. A l'inverse, le contrôleur 25 transmet un signal à au moins une voire chaque machine électrique 21 pour mettre en oeuvre le mode de veille MODV. Eventuellement une alerte est émise par l'alerteur pour en informer le pilote.

Si le mode de veille MODV ou le mode performant MODPERF est le mode de fonctionnement choisi, le contrôleur 25 transmet un signal à au moins une voire chaque machine électrique 21 pour mettre en oeuvre le mode de veille MODV.

Selon un autre aspect, les diverses fonctions de transfert Fc(t), Fa1(t), Fa2(t), Fp(t), Fe(t), Fr(t) évoquées précédemment peuvent prendre la forme de fonction F du deuxième ordre dépendant du temps t et de trois paramètres, à savoir d'un gain statique G, d'un coefficient d'amortissement A et d'une pulsation w soit :

$$F = G/(1 + (2*A*t/w) + ((t*t)/(w*w)))$$

où « / » représente le signe de la division, « * » représente le signe de la multiplication, « + » représente le signe de l'addition.

Ces trois paramètres peuvent varier d'une fonction à l'autre et peuvent être déterminés par essais et/ou simulations. Une telle fonction de transfert permet d'atteindre le fonctionnement requis de manière progressive, notamment pour mettre en parallèle la modification de la régulation du ou des moteurs thermiques.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

**Revendications**

1. Procédé de contrôle d'une installation motrice (5) thermique et électrique pour mettre en mouvement au moins un organe rotatif (2, 3) d'un giravion (1), ladite installation motrice (5) comprenant un système thermique (10) et un système électrique (20) pour mettre en mouvement une chaîne de transmission de puissance (15) reliée audit au moins un organe rotatif (2, 3), le système thermique (10) ayant au moins un moteur thermique (11) et le système électrique (20) étant muni d'au moins une machine électrique (21), ledit système électrique (20) ayant une source d'énergie électrique (22) reliée électriquement à ladite au moins une machine électrique (21),

le procédé comportant une sélection (STPSELECT) avec un sélecteur (42) d'un mode de fonctionnement choisi parmi plusieurs modes de fonctionnement, ledit procédé ayant une phase d'hybridation (Phashyb) comprenant les étapes suivantes :

- comparaison (STP8) avec un contrôleur (25) entre une altitude-densité (Zt) courante et une altitude-densité seuil (Zs),
- contrôle avec le contrôleur (25) de ladite au moins une machine électrique (21) en fonction dudit mode de fonctionnement choisi ainsi que de ladite comparaison et d'une puissance nécessaire (WNEC) à fournir à ladite chaîne de transmission de puissance (15),

ledit organe rotatif comprenant une voilure tournante (2), et ledit procédé comportant:

- détermination d'une panne du système thermique (10) le rendant inopérant,
- détermination d'une vitesse de rotation (Nr) de la voilure tournante (2),
- commande (STPROT) avec le contrôleur (25) du fonctionnement en mode moteur de ladite au moins une machine électrique (21) en présence d'une dite panne et d'une dite vitesse de rotation (Nr) supérieure à zéro,
- comparaison (STP10) de la vitesse de rotation (Nr) à une vitesse d'autorotation (Nrautorot) mémorisée,
- commande (STP101) avec le contrôleur (25) de ladite au moins une machine électrique (21) pour délivrer une puissance auxiliaire maximale (Pwemax) en mode moteur si ladite vitesse de rotation (Nr) est inférieure à ladite vitesse d'autorotation (Nrautorot), et
- commande (STP102) avec le contrôleur (25) de ladite au moins une machine électrique (21) pour délivrer en mode moteur une puissance (Pwelow) inférieure à ladite puissance auxiliaire maximale (Pwemax) si ladite vitesse de rotation (Nr) est supérieure ou égale à ladite vitesse d'autorotation (Nrautorot).

2. Procédé selon la revendication 1, lesdits plusieurs modes de fonctionnement comprenant un mode de veille (MODV) durant lequel ladite au moins une machine électrique (21) est arrêtée ou en mode générateur électrique pour recharger ladite source d'énergie électrique (22) durant une phase de recharge (STPRECHARGE), un mode économique (MODECO) durant lequel ladite au moins une machine électrique (21) fonctionne en mode moteur et le système thermique (10) délivre une puissance réduite (Ptm), et un mode performant (MODPERF) durant lequel ladite au moins une machine électrique (21) fonctionne en mode moteur et le système thermique (10) délivre une puissance principale maximale (Pmax), et le contrôleur (25) contrôlant ladite au moins une machine électrique (21) selon ledit mode de veille lorsque conjointement ledit mode de fonctionnement choisi est ledit mode performant et ladite altitude-densité courante est inférieure à l'altitude-densité seuil (Zs).

3. Procédé selon l'une quelconque des revendications 1 à 2, ledit procédé comportant une détection (STP1) d'un dysfonctionnement dudit système électrique (20), ladite phase d'hybridation (Phashyb) étant interdite en présence dudit dysfonctionnement.

4. Procédé selon l'une quelconque des revendications 1 à 3, ledit procédé comportant une mesure d'une capacité électrique (C) de ladite source d'énergie électrique (22), ladite phase d'hybridation (Phashyb) étant interdite en présence d'une capacité électrique (C) mesurée inférieure à un seuil de capacité électrique (C1), ledit procédé comportant une commande avec ledit contrôleur (25) d'une phase de recharge (STPRECHARGE) de ladite source d'énergie électrique (22) en commandant le fonctionnement en mode générateur électrique de ladite machine électrique (21) lorsque ladite capacité électrique (C) mesurée est inférieure ou égale au seuil de capacité électrique (C1).

5. Procédé selon l'une quelconque des revendications 1 à 4, ladite phase d'hybridation (Phashyb) étant interdite (STP5) par le contrôleur (25) en présence d'une vitesse de rotation (Nr) mesurée n'appartenant pas à une plage de référence de vitesse de rotation.

6. Procédé selon l'une quelconque des revendications 1 à 5, ledit au moins un moteur thermique (11) étant piloté par un calculateur moteur (12), ledit calculateur moteur (12) comprenant un mode automatique durant lequel ledit calculateur moteur (12) annexe une puissance délivrée par le moteur thermique (11) contrôlé à une vitesse de rotation (Nr) dudit au moins un organe rotatif (2, 3).

7. Procédé selon la revendication 6, ledit procédé comportant une étape de détermination (STP6) du mode appliqué par le calculateur moteur (12), ladite phase d'hybridation (Phashyb) étant autorisée par le contrôleur (25) uniquement lorsque ledit calculateur moteur (12) fonctionne selon ledit mode automatique.

8. Procédé selon l'une quelconque des revendications 2 ou 3 à 7 si dépendantes de la revendication 2, lorsque ladite altitude-densité (Zt) courante est supérieure à ladite altitude-densité seuil (Zs) et ledit mode de fonctionnement choisi est ledit mode performant (MODPERF) durant lequel ladite au moins une machine électrique (21) fonctionne en mode moteur et le système thermique (10) délivre la puissance principale maximale (Pmax), le procédé comporte :

    - détermination (STP12) avec le contrôleur (25) que ladite puissance nécessaire (Wnec) est comprise ou n'est pas comprise dans une plage de test allant d'une puissance disponible (Pwdt) pouvant être développée par le système thermique (10) jusqu'à une puissance limite maximale (Lbtp) acceptable par ladite chaîne de transmission de puissance (15), ladite puissance disponible et ladite puissance limite maximale étant exclues de ladite plage de test,
    - application (STPPERF) avec le contrôleur (25) du mode performant (MODPERF) lorsque ladite puissance nécessaire (Wnec) est comprise dans ladite plage de test,
    - application avec le contrôleur d'un mode de veille (MODV) durant lequel ladite au moins une machine électrique (21) est arrêtée lorsque ladite puissance nécessaire (Wnec) est en dehors de ladite plage de test.

9. Procédé selon l'une quelconque des revendications 2 ou 3 à 8 si dépendantes de la revendication 2, lorsque ladite altitude-densité (Zt) courante est supérieure à ladite altitude-densité seuil (Zs) et ledit mode de fonctionnement choisi est ledit mode économique (MODECO) durant lequel ladite au moins une machine électrique (21) fonctionne en mode moteur et le système thermique (10) délivre la puissance réduite (Ptm), le procédé comporte :

    - détermination (STP13) avec le contrôleur (25) que ladite puissance nécessaire (Wnec) est inférieure ou supérieure ou égale à une puissance disponible (Pwdt) pouvant être développée par le système thermique (10),
    - application (STPECO) avec le contrôleur (25) du mode économique (MODECO) lorsque ladite puissance nécessaire (Wnec) est inférieure à la puissance disponible (Pwdt),
    - application avec le contrôleur (25) d'un mode de veille (MODV) durant lequel ladite au moins une machine électrique (21) est arrêtée lorsque ladite puissance nécessaire (Wnec) est supérieure ou égale à la puissance disponible (Pwdt).

10. Procédé selon l'une quelconque des revendications 2 ou 3 à 9 si dépendantes de la revendication 2, lorsque ladite altitude-densité (Zt) courante est inférieure ou égale à ladite altitude-densité seuil (Zs) et ledit mode de fonctionnement choisi est ledit mode économique (MODECO) durant lequel ladite au moins une machine électrique (21) fonctionne en mode moteur et le système thermique (10) délivre la puissance réduite (Ptm), le procédé comporte :

- détermination (STP16) avec le contrôleur (25) que ladite puissance nécessaire (Wnec) est inférieure ou supérieure ou égale à une puissance limite maximale (Lbtp) acceptable par ladite chaîne de transmission de puissance (15),
- application (STPECO) avec le contrôleur (25) du mode économique (MODECO) lorsque ladite puissance nécessaire (Wnec) est inférieure à la puissance limite maximale (Lbtp),
- application avec le contrôleur (25) d'un mode de veille (MODV) durant lequel ladite au moins une machine électrique (21) est arrêtée lorsque ladite puissance nécessaire (Wnec) est supérieure ou égale à la puissance limite maximale (Lbtp).

11. Procédé selon l'une quelconque des revendications 2 ou 3 à 10 si dépendantes de la revendication 2, lors dudit mode économique (MODECO) choisi parmi lesdits plusieurs modes de fonctionnement, le procédé comporte une commande avec le contrôleur (25) de ladite au moins une machine électrique (21) pour fournir en mode moteur une puissance égale au produit d'une fonction de transfert économique (Fe) avec soit une puissance économique (Pseco) soit une différence entre la puissance nécessaire (Wnec) et la puissance réduite (Ptm) prédéterminée.

12. Procédé selon l'une quelconque des revendications 2 ou 3 à 11 si dépendantes de la revendication 2, lors dudit mode performant (MODPERF) choisi parmi lesdits plusieurs modes de fonctionnement, le procédé comporte une commande avec le contrôleur (25) de ladite au moins une machine électrique (21) pour fournir en mode moteur une puissance égale au produit d'une fonction de transfert performante (Fp) avec soit une puissance performante (Psperfo) soit une différence entre une puissance limite maximale (Lbtp) prédéterminée acceptable par ladite chaîne de transmission de puissance (15) et la puissance nécessaire (Wnec).

13. Procédé selon l'une quelconque des revendications 1 à 12, une phase de recharge (STPRECHARGE) comportant les étapes suivantes :

- détermination (STP18) qu'une vitesse d'avancement (V) dudit giravion est comprise dans une plage de vitesse d'avancement mémorisée,

- détermination (STP19) qu'une capacité électrique (C) de ladite source d'énergie électrique (22) est inférieure à un seuil de recharge (C3),
- tant que ladite vitesse d'avancement (V) dudit giravion (1) est comprise dans ladite une plage de vitesse d'avancement et que la capacité électrique (C) de ladite source d'énergie électrique (22) est inférieure au seuil de recharge (C3), recharge (STP20) de ladite source d'énergie électrique (22) en contrôlant avec le contrôleur (25) ladite au moins une machine électrique (21) en mode générateur électrique.

14. Giravion (1) muni d'au moins un organe rotatif (2, 3), ledit giravion (1) comprenant une installation motrice (5) thermique et électrique pour mettre en mouvement ledit au moins un organe rotatif (2, 3), ladite installation motrice (5) comprenant un système thermique (10) et un système électrique (20) pour mettre en mouvement une chaîne de transmission de puissance (15) reliée audit au moins un organe rotatif (2, 3), le système thermique (10) ayant au moins un moteur thermique (11) et le système électrique (20) étant muni d'au moins une machine électrique (21), ledit système électrique (20) ayant une source d'énergie électrique (22) reliée électriquement à ladite au moins une machine électrique (21), ledit organe rotatif comprenant une voilure tournante, le giravion (1) comportant un sélecteur (42) pour sélectionner un mode de fonctionnement choisi parmi plusieurs modes de fonctionnement, ledit giravion (1) comprenant un contrôleur (25) relié au sélecteur (42) ainsi qu'à un senseur (34) d'une altitude-densité et à un senseur (38) d'une puissance nécessaire (WNEC) à fournir à ladite chaîne de transmission de puissance (15), ledit contrôleur (25) étant configuré pour commander ladite au moins une machine électrique (21) en appliquant le procédé selon l'une quelconque des revendications 1 à 13.

**Patentansprüche**

1. Verfahren zum Steuern einer thermischen und elektrischen Antriebsanlage (5) zum Antreiben mindestens eines Drehglieds (2, 3) eines Drehflügelflugzeugs (1), wobei die Antriebsanlage (5) ein thermisches System (10) und ein elektrisches System (20) zum Antreiben einer Kraftübertragungskette (15) umfasst, die mit dem mindestens einen Drehglied (2, 3) verbunden ist, wobei das thermische System (10) mindestens einen Verbrennungsmotor (11) aufweist und das elektrische System (20) mit mindestens einer elektrischen Maschine (21) versehen ist, wobei das elektrische System (20) eine elektrische Energiequelle (22) aufweist, die mit der mindestens einen elektrischen Maschine (21) elektrisch verbunden ist,

wobei das Verfahren ein Wählen (STPSELECT), mittels eines Wählers (42), eines aus einer Mehrzahl von Betriebsmodi ausgewählten Betriebsmodus umfasst, wobei das Verfahren eine Hybridisierungsphase (Phashyb) aufweist, die die folgenden Schritte umfasst:

    - Vergleichen (STP8), durch eine Steuereinheit (25), zwischen einer aktuellen Höhendichte (Zt) und einer Schwellen-Höhendichte (Zs),
    - Steuern der mindestens einen elektrischen Maschine (21) durch die Steuereinheit (25) in Abhängigkeit von dem gewählten Betriebsmodus sowie von dem Vergleich und einer von der Kraftübertragungskette (15) benötigten Leistung (WNEC),

wobei das Drehglied einen Drehflügel (2) umfasst und das Verfahren umfasst:

    - Bestimmen eines Ausfalls des thermischen Systems (10), der es funktionsunfähig macht,
    - Bestimmen einer Drehgeschwindigkeit (Nr) des Drehflügels (2),
    - Steuern (STPROT) des Betriebs der mindestens einen elektrischen Maschine (21) im Motormodus durch die Steuereinheit (25) bei Vorliegen eines besagten Ausfalls und einer besagten Drehgeschwindigkeit (Nr) größer als Null,
    - Vergleichen (STP10) der Drehgeschwindigkeit (Nr) mit einer gespeicherten Autorotationsgeschwindigkeit (Nrautorot),
    - Steuern (STP101) der mindestens einen elektrischen Maschine (21) durch die Steuereinheit (25), um im Motorbetrieb eine maximale Hilfsleistung (Pwemax) zu liefern, wenn die Drehgeschwindigkeit (Nr) kleiner ist als die Autorotationsgeschwindigkeit (Nrautorot), und
    - Steuern (STP102) der mindestens einen elektrischen Maschine (21) durch die Steuereinheit (25), um im Motorbetrieb eine Leistung (Pwelow) zu liefern, die geringer ist als die maximale Hilfsleistung (Pwemax), wenn die Drehgeschwindigkeit (Nr) größer oder gleich der Autorotationsgeschwindigkeit (Nrautorot) ist.

2. Verfahren nach Anspruch 1, bei dem die mehreren Betriebsmodi einen Bereitschaftsmodus (MODV), in dem die mindestens eine elektrische Maschine (21) angehalten ist oder sich im elektrischen Generatormodus befindet, um die elektrische Energiequelle (22) während einer Ladephase (STPRECHARGE) aufzuladen, einen Sparmodus (MODECO), in dem die mindestens eine elektrische Maschine (21) im Motormodus arbeitet und das thermische System (10) eine reduzierte Leistung (Ptm) abgibt, und einen Leistungsmodus (MODPERF) umfassen, in dem die mindestens eine elektrische Maschine (21) im Motormodus arbeitet und das thermische System (10) eine maximale Hauptleistung (Pmax) liefert, und wobei die Steuereinheit (25) die mindestens eine elektrische Maschine (21) gemäß dem Bereitschaftsmodus steuert, wenn gleichzeitig der gewählte Betriebsmodus der Leistungsmodus ist und die aktuelle Dichtehöhe niedriger als die Schwellendichtehöhe (Zs) ist.

3. Verfahren nach einem der Ansprüche 1 bis 2, bei dem das Verfahren eine Erkennung (STP1) einer Fehlfunktion des elektrischen Systems (20) umfasst, wobei bei Vorliegen der Fehlfunktion die Hybridisierungsphase (Phashyb) gesperrt ist.

4. Verfahren nach einem der Ansprüche 1 bis 3, wobei das Verfahren eine Messung einer elektrischen Kapazität (C) der elektrischen Energiequelle (22) umfasst, wobei die Hybridisierungsphase (Phashyb) bei Vorliegen einer gemessenen elektrischen Kapazität (C), die kleiner als ein Schwellenwert der elektrischen Kapazität (C1) ist, gesperrt wird, wobei das Verfahren eine Steuerung, durch die Steuereinheit (25), einer Aufladephase (STPRECHARGE) der elektrischen Energiequelle (22) durch Steuern des Betriebs der elektrischen Maschine (21) im elektrischen Generatormodus umfasst, wenn die gemessene elektrische Kapazität (C) kleiner oder gleich dem Schwellenwert der elektrischen Kapazität (C1) ist.

5. Verfahren nach einem der Ansprüche 1 bis 4, bei dem die Hybridisierungsphase (Phashyb) bei Vorliegen einer gemessenen Drehzahl (Nr), die nicht in einen Drehzahlreferenzbereich fällt, durch die Steuereinheit (25) gesperrt (STP5) wird.

6. Verfahren nach einem der Ansprüche 1 bis 5, bei dem der mindestens eine Verbrennungsmotor (11) von einem Motorrechner (12) gesteuert wird, wobei der Motorrechner (12) einen automatischen Modus umfasst, in dem der Motorrechner (12) eine von dem gesteuerten Verbrennungsmotor (11) abgegebene Leistung an eine Drehgeschwindigkeit (Nr) des mindestens einen drehbaren Organs (2, 3) koppelt.

7. Verfahren nach Anspruch 6, wobei das Verfahren einen Schritt des Bestimmens (STP6) des vom Motorrechner (12) angewandten Modus umfasst, wobei die Hybridisierungsphase (Phashyb) durch die Steuereinheit (25) nur dann zugelassen wird, wenn der Motorrechner (12) im automatischen Modus arbeitet.

**8.** Verfahren nach einem der Ansprüche 2 oder 3 bis 7, soweit von Anspruch 2 abhängig, bei dem, wenn die aktuelle Dichtehöhe (Zt) größer als die Schwellendichtehöhe (Zs) ist und der gewählte Betriebsmodus der Hochleistungsmodus (MODPERF) ist, in dem die mindestens eine elektrische Maschine (21) im Motormodus arbeitet und das thermische System (10) die maximale Hauptleistung (Pmax) liefert, das Verfahren umfasst :

- Bestimmen (STP12), durch die Steuereinheit (25), dass die benötigte Leistung (Wnec) in einem Testbereich liegt oder nicht liegt, der von einer verfügbaren Leistung (Pwdt), die von dem thermischen System (10) erzeugt werden kann, bis zu einer maximalen Grenzleistung (Lbtp) reicht, die von der Leistungsübertragungskette (15) toleriert werden kann, wobei die verfügbare Leistung und die maximale Grenzleistung von dem Testbereich ausgeschlossen sind,
- Anwenden (STPPERF), durch die Steuereinheit (25), des Leistungsmodus (MODPERF), wenn die erforderliche Leistung (Wnec) innerhalb des Testbereichs liegt,
- Anwenden, mit der Steuereinheit, eines Bereitschaftsmodus (MODV), in dem die mindestens eine elektrische Maschine (21) angehalten wird, wenn die erforderliche Leistung (Wnec) außerhalb des Testbereichs liegt.

**9.** Verfahren nach einem der Ansprüche 2 oder 3 bis 8, soweit von Anspruch 2 abhängig, bei dem, wenn die aktuelle Dichtehöhe (Zt) größer als die Schwellendichtehöhe (Zs) ist und der gewählte Betriebsmodus der Sparmodus (MODECO) ist, in dem die mindestens eine elektrische Maschine (21) im Motorbetrieb arbeitet und das thermische System (10) die reduzierte Leistung (Ptm) abgibt, das Verfahren umfasst :

- Bestimmen (STP13), durch die Steuereinheit (25), dass die benötigte Leistung (Wnec) kleiner oder größer oder gleich einer verfügbaren Leistung (Pwdt) ist, die von dem thermischen System (10) erzeugt werden kann,
- Anwenden (STPECO) des Sparmodus (MODECO) durch die Steuereinheit (25), wenn die benötigte Leistung (Wnec) kleiner als die verfügbare Leistung (Pwdt) ist,
- Anwenden eines Bereitschaftsmodus (MODV) durch die Steuereinheit (25), in dem die mindestens eine elektrische Maschine (21) angehalten wird, wenn die benötigte Leistung (Wnec) größer oder gleich der verfügbaren Leistung (Pwdt) ist.

**10.** Verfahren nach einem der Ansprüche 2 oder 3 bis 9, soweit von Anspruch 2 abhängig, bei dem, wenn die aktuelle Dichtehöhe (Zt) kleiner oder gleich der Schwellendichtehöhe (Zs) ist und der gewählte Betriebsmodus der Sparmodus (MODECO) ist, in dem die mindestens eine elektrische Maschine (21) im Motorbetrieb arbeitet und das thermische System (10) die reduzierte Leistung (Ptm) abgibt, das Verfahren umfasst:

- Bestimmen (STP16), durch die Steuereinheit (25), dass die benötigte Leistung (Wnec) kleiner oder größer oder gleich einer maximalen Grenzleistung (Lbtp) ist, die von der Kraftübertragungskette (15) toleriert wird,
- Anwenden (STPECO) des Sparmodus (MODECO) durch die Steuereinheit (25), wenn die erforderliche Leistung (Wnec) kleiner als die maximale Grenzleistung (Lbtp) ist,
- Anwenden eines Bereitschaftsmodus (MODV) durch die Steuereinheit (25), in dem die mindestens eine elektrische Maschine (21) angehalten wird, wenn die erforderliche Leistung (Wnec) größer oder gleich der maximalen Grenzleistung (Lbtp) ist.

**11.** Verfahren nach einem der Ansprüche 2 oder 3 bis 10, soweit von Anspruch 2 abhängig, wenn aus den mehreren Betriebsmodi der bei dem, wenn aus den mehreren Betriebsmodi der Sparmodus (MODECO), ausgewählt wird, das Verfahren ein Steuern der mindestens einen elektrischen Maschine (21) mit der Steuereinheit (25) umfasst, um im Motorbetrieb eine Leistung zu liefern, die gleich dem Produkt einer Sparmodus-Übertragungsfunktion (Fe) mit entweder einer Sparmodus-Leistung (Pseco) oder einer Differenz zwischen der benötigten Leistung (Wnec) und der vorbestimmten reduzierten Leistung (Ptm) ist.

**12.** Verfahren nach einem der Ansprüche 2 oder 3 bis 11, soweit von Anspruch 2 abhängig, bei dem, wenn aus den mehreren Betriebsmodi der Leistungsmodus (MODPERF) ausgewählt wird, das Verfahren ein Steuern der mindestens einen elektrischen Maschine (21) durch die Steuereinheit (25) umfasst, um im Motorbetrieb eine Leistung zu liefern, die gleich dem Produkt einer Leistungsmodus-Übertragungsfunktion (Fp) mit entweder einer Leistungsmodus-Leistung (Psperfo) oder einer Differenz zwischen einer vorbestimmten maximalen Grenzleistung (Lbtp), die durch die Kraftübertragungskette (15) tolerierbar ist, und der erforderlichen Leistung (Wnec) ist.

**13.** Verfahren nach einem der Ansprüche 1 bis 12, bei dem eine Aufladephase (STPRECHARGE) folgende Schritte umfasst:

- Bestimmen (STP 18), dass eine Fortbewegungsgeschwindigkeit (V) des Drehflügelflugzeugs in einem gespeicherten Fortbewegungsgeschwindigkeitsbereich liegt,

- Bestimmen (STP19), dass eine elektrische Kapazität (C) der elektrischen Energiequelle (22) kleiner als ein Aufladeschwellenwert (C3) ist,

- solange die Fortbewegungsgeschwindigkeit (V) des Drehflügelflugzeugs (1) in dem einen Fortbewegungsgeschwindigkeitsbereich liegt und die elektrische Kapazität (C) der elektrischen Energiequelle (22) kleiner als der Aufladeschwellenwert (C3) ist, Aufladen (STP20) der elektrischen Energiequelle (22) durch Steuern der mindestens einen elektrischen Maschine (21) im elektrischen Generatormodus durch die Steuereinheit (25).

14. Drehflügelflugzeug (1) mit mindestens einem Drehglied (2, 3), wobei das Drehflügelflugzeug (1) eine thermische und elektrische Antriebsanlage (5) zum Antreiben des mindestens einen Drehglieds (2, 3) umfasst, wobei die Antriebsanlage (5) ein thermisches System (10) und ein elektrisches System (20) zum Antreiben einer Kraftübertragungskette (15) umfasst, die mit dem mindestens einen Drehglied (2, 3) verbunden ist, wobei das thermische System (10) mindestens einen Verbrennungsmotor (11) aufweist und das elektrische System (20) mit mindestens einer elektrischen Maschine (21) versehen ist, wobei das elektrische System (20) eine elektrische Energiequelle (22) aufweist, die mit der mindestens einen elektrischen Maschine (21) elektrisch verbunden ist,

wobei das Drehglied einen Drehflügel umfasst, wobei das Drehflügelflugzeug (1) einen Wähler (42) zum Wählen eines aus einer Mehrzahl von Betriebsmodi ausgewählten Betriebsmodus aufweist, wobei das Drehflügelflugzeug (1) eine Steuereinheit (25) umfasst, die mit dem Wähler (42) sowie mit einem Sensor (34) für eine Höhendichte und mit einem Sensor (38) für eine von der Kraftübertragungskette (15) benötigte Leistung (WNEC) verbunden ist, wobei die Steuereinheit (25) konfiguriert ist, um die mindestens eine elektrische Maschine (21) durch Anwenden des Verfahrens nach einem der Ansprüche 1 bis 13 zu steuern.

**Claims**

1. A method for controlling a thermal and electrical power plant (5) for setting in motion at least one rotary member (2, 3) of a rotorcraft (1), the power plant (5) comprising a thermal system (10) and an electrical system (20) for setting in motion a power transmission system (15) connected to the at least one rotary member (2, 3), the thermal system (10) having at least one heat engine (11) and the electrical system (20) being provided with at least one electric machine (21), the electrical system (20) having an electrical energy source (22) electrically connected to the at least one electric machine (21),

wherein the method comprises selecting (STPSELECT), with a selector (42) of an operating mode chosen from several operating modes, the method having a hybridization phase (Phashyb) comprising the following steps:

- comparing (STP8), with a controller (25), a current density altitude (Zt) and a threshold density altitude (Zs) ;
- controlling, with the controller (25), the at least one electric machine (21), depending on the chosen operating mode as well as the comparing and a necessary power (WNEC) to be supplied to the power transmission system (15), the rotary member comprising a rotary wing (2), and the method comprising:

- determining a failure of the thermal system (10) rendering it inoperative,
- determining a speed of rotation (Nr) of the rotary wing (2),
- commanding (STPROT) with the controller (25) of the operation in motor mode of the at least one electric machine (21) in the presence of one failure and of one speed of rotation (Nr) greater than zero,
- comparing (STP10) of the speed of rotation (Nr) with a stored autorotation speed (Nrautorot),
- commanding (STP101) with the controller (25) of the at least one electric machine (21) to deliver maximum auxiliary power (Pwemax) in motor mode if the speed of rotation (Nr) is lower than the autorotation speed (Nrautorot), and
- commanding (STP102) with the controller (25) of the at least one electric machine (21) to deliver in motor mode a power (Pwelow) that is lower than the maximum auxiliary power (Pwemax) if the speed of rotation (Nr) is greater than or equal to the autorotation speed (Nrautorot).

2. The method according to claim 1, the several operating modes comprising a standby mode (MODV) during which the at least one electric machine (21) is stopped or is in electric generator mode in order to recharge the electrical energy source (22) during a recharging phase (STPRECHARGE), an economy mode (MODECO) during which the at least one electric machine (21) operates in motor mode and the thermal system (10) delivers a reduced power (Ptm), and a high-performance mode (MODPERF) during which the at least one electric machine (21) operates in motor mode and the thermal system (10) delivers a maximum main power (Pmax), and the controller (25) controlling the at least one electric machine (21) according to the standby mode when, concurrently, the chosen operating mode is the high-performance mode and the current density altitude is less than the threshold density altitude (Zs).

3. The method according to any one of claim 1 or claim 2,
   the method comprising detecting (STP1) a malfunction of the electrical system (20), the hybridization phase (Phashyb) being prohibited when the malfunction is present.

4. The method according to any one of claim 1 through claim 3,
   the method comprising measuring an electrical capacity (C) of the electrical energy source (22), the hybridization phase (Phashyb) being prohibited if a measured electrical capacity (C) is less than an electrical capacity threshold (C1), the method comprising commanding, with the controller (25), of a phase of recharging (STPRECHARGE) the electrical energy source (22) by commanding operation of the electric machine (21) in electric generator mode when the measured electrical capacity (C) is less than or equal to the electrical capacity threshold (C1).

5. The method according to any one of claim 1 through claim 4,
   the hybridization phase (Phashyb) being prohibited (STP5) by the controller (25) if a measured speed of rotation (Nr) does not lie within a reference rotational speed range.

6. The method according to any one of claim 1 through claim 5,
   the at least one heat engine (11) being controlled by an engine computer (12), the engine computer (12) comprising an automatic mode during which the engine computer (12) incorporates a power delivered by the controlled heat engine (11) at a speed of rotation (Nr) of the at least one rotary member (2, 3).

7. The method according to claim 6,
   the method including a step of determining (STP6) the mode applied by the engine computer (12), the hybridization phase (Phashyb) being authorized by the controller (25) only when the engine computer (12) is operating in the automatic mode.

8. The method according to any one of claim 2, or claim 3 through claim 7 if dependent on claim 2,
   when the current density altitude (Zt) is greater than the threshold density altitude (Zs) and the chosen operating mode is the high-performance mode (MODPERF) during which the at least one electric machine (21) operates in motor mode and the thermal system (10) delivers the maximum main power (Pmax), the method comprises:

   - determining (STP12), with the controller (25), whether the necessary power (Wnec) lies within or outside a test range ranging from an available power (Pwdt) that can be produced by the thermal system (10) up to a maximum limit power (Lbtp) that can be accepted by the power transmission system (15), the available power and the maximum limit power being excluded from the test range;
   - applying (STPPERF), with the controller (25), the high-performance mode (MODPERF) when the necessary power (Wnec) lies within the test range; and
   - applying, with the controller, a standby mode (MODV) during which the at least one electric machine (21) is stopped when the necessary power (Wnec) lies outside the test range.

9. The method according to any one of claim 2, or claim 3 through claim 8 if dependent on claim 2,
   when the current density altitude (Zt) is greater than the threshold density altitude (Zs) and the chosen operating mode is the economy mode (MODECO) during which the at least one electric machine (21) operates in motor mode and the thermal system (10) delivers the reduced power (Ptm), the method comprises:

   - determining (STP13), with the controller (25), whether the necessary power (Wnec) is less than or greater than or equal to an available power (Pwdt) that can be produced by the thermal system (10);
   - applying (STPECO), with the controller (25), the economy mode (MODECO) when the necessary power (Wnec) is less than the available power (Pwdt);
   - applying, with the controller (25), a standby mode (MODV) during which the at least one electric machine (21) is stopped when the necessary power (Wnec) is greater than or equal to the available power (Pwdt).

10. The method according to any one of claim 2, or claim 3 through claim 9 if dependent on claim 2,
    when the current density altitude (Zt) is less than or equal to the threshold density altitude (Zs) and the chosen operating mode is the economy mode (MODECO) during which the at least one electric machine (21) operates in motor mode and the thermal system (10) delivers the reduced power (Ptm), the method comprises:

- determining (STP16), with the controller (25), whether the necessary power (Wnec) is less than or greater than or equal to a maximum limit power (Lbtp) that can be accepted by the power transmission system (15);
- applying (STPECO), with the controller (25), the economy mode (MODECO) when the necessary power (Wnec) is less than the maximum limit power (Lbtp),
- applying, with the controller (25), a standby mode (MODV) during which at least one electric machine (21) is stopped when the necessary power (Wnec) is greater than or equal to the maximum limit power (Lbtp).

11. The method according to any one of claim 2, or claim 3 through claim 10 if dependent on claim 2, when the economy mode (MODECO) is chosen from the several operating modes, the method comprises commanding, with the controller (25), the at least one electric machine (21) to supply, in motor mode, a power equal to the product of an economy transfer function (Fe) and either an economy power (Pseco) or a difference between the necessary power (Wnec) and the predetermined reduced power (Ptm).

12. The method according to any one of claim 2, or claim 3 through claim 11 if dependent on claim 2, when the high-performance mode (MODPERF) is chosen from the several operating modes, the method comprises commanding, with the controller (25), the at least one electric machine (21) to supply, in motor mode, a power equal to the product of a high-performance transfer function (Fp) and either a high-performance power (Psperfo) or a difference between a predetermined maximum limit power (Lbtp) that can be accepted by the power transmission system (15) and the necessary power (Wnec).

13. The method according to any one of claim 1 through claim 12, a recharging phase (STPRECHARGE) comprising the following steps:

- determining (STP18) whether a forward speed (V) of the rotorcraft lies within a stored forward speed range;
- determining (STP19) whether an electrical capacity (C) of the electrical energy source (22) is less than a recharging threshold (C3);
- as long as the forward speed (V) of the rotorcraft (1) lies within the forward speed range and the electrical capacity (C) of the electrical energy source (22) is less than the recharging threshold (C3), recharging (STP20) the electrical energy source (22) by controlling, with the controller (25), the at least one electric machine (21) in electric generator mode.

14. A rotorcraft (1) provided with at least one rotary member (2, 3), the rotorcraft (1) comprising a thermal and electrical power plant (5) for setting in motion the at least one rotary member (2, 3), the power plant (5) comprising a thermal system (10) and an electrical system (20) for setting in motion a power transmission system (15) connected to the at least one rotary member (2, 3), the thermal system (10) having at least one heat engine (11) and the electrical system (20) being provided with at least one electric machine (21), the electrical system (20) having an electrical energy source (22) electrically connected to the at least one electric machine (21), the rotary member comprising a rotary wing, the rotorcraft (1) comprising a selector (42) for selecting an operating mode chosen from several operating modes, the rotorcraft (1) comprising a controller (25) connected to the selector (42) as well as to a density altitude sensor (34) and a sensor (38) of a necessary power (WNEC) to be supplied to the power transmission system (15), the controller (25) being configured to command the at least one electric machine (21) by applying the method according to any one of claim 1 through claim 13.

Fig.1

EP 4 046 909 B1

Fig.2

21

Fig.3

EP 4 046 909 B1

Fig.4

Fig.5

Fig.6

Fig.7

Fig.8

## RÉFÉRENCES CITÉES DANS LA DESCRIPTION

**Documents brevets cités dans la description**

- FR 2994687
- FR 3090576
- US 20190322382 A